# FASCICULE DE BREVET EUROPEEN

(11) **EP 1 125 506 B1**
(45) Date de publication et mention de la délivrance du brevet: **12.05.2004**
(21) Numéro de dépôt: 01400325.5
(22) Date de dépôt: 09.02.2001
(51) Int. Cl.: A23G 3/26, A23G 7/00

(54) **Installation de dragéification ou d'enrobage avec dispositif de nettoyage de la rampe de distribution**
Überziehungs- oder Kandierungsmaschinen ausgerüstet mit Reinigungsgerät der Verteilerleitung
Candying or coating machine with distributing bar provided with cleaning device

(30) Priorité: 16.02.2000 FR 0001878
(43) Date de publication de la demande: 22.08.2001
(73) Titulaire: ETS. F. Dumoulin et Cie, 77220 Tournan en Brie (FR)
(72) Inventeur: Dumoulin, Bernard Marcel, 94210 La Varenne (FR)
(74) Mandataire: Boutin, Antoine

(56) Documents cités:
- EP-A- 0 056 573
- WO-A-91/12789
- WO-A-95/19713
- US-A- 4 543 906
- US-A- 4 596 205
- US-A- 4 766 839
- US-A- 4 844 001
- US-A- 5 441 565
- US-A- 5 495 418

## Description

La présente invention concerne le domaine des installations et appareils de dragéification ou enrobage de produits, et plus précisément le nettoyage des rampes de distribution ou de dosage des substances d'enrobage ou de dragéification.

Les installations de dragéification ou d'enrobage notamment pour l'industrie alimentaire ou pharmaceutique, utilisent des turbines rotatives de formes quasi cylindriques dans lesquelles les produits à enrober (par exemple amandes, cacahuètes, chewing gum, chocolat, etc...) sont mis en mouvement par rotation du cylindre.

Durant cette rotation. des adjonctions alternatives de produits tels que sirop de sucre, chocolat liquide. poudres diverses (par exemple sucre glace, sucre semoule, amidon, xylitol, maltitol. etc...) suivies d'un séchage sont effectuées selon des recettes propres aux différents produits.

Afin de rendre le process automatique, les cylindres comportent généralement dans leur partie centrale différents systèmes de dosage tels qu'une rampe pour la distribution et le dosage du sirop, du chocolat, de la poudre et des produits de vernissage, ainsi qu'une gaine d'amenée d'air permettant un soufflage d'air de séchage.

Durant l'étape d'enrobage (dragéification) les produits à enrober sont mis en rotation et mélangés, par exemple, par des pales de brassage fixées sur le cylindre.

Pendant la période d'adjonction, les produits d'enrobage, (tels que sirop, chocolat, ...) et les intérieurs (ou dragées) collent plus ou moins sur les pales de mélange et sur la paroi du cylindre, puis se décrochent. Certains viennent ainsi se coller sur les divers systèmes en place dans le cylindre. Il en va de même des particules de sirop de sucre, chocolat ou poudre qui sont pulvérisées sur les dragées.

Après chaque "batch" de fabrication, il est nécessaire de laver soigneusement l'intérieur du cylindre, la rampe de distribution et de dosage, la gaine de ventilation et les pales de brassage par exemple par injection d'eau ou d'un solvant de nettoyage et/ou de désinfection. Ceci peut être réalisé par des buses de lavage disposées à l'intérieur de la turbine intervenant après chaque fabrication. Cependant, il s'avère que l'ensemble du système de dosage ne peut pas être correctement nettoyé en particulier quand il s'agit de chocolat ou de poudre.

Pour palier à ce problème actuellement primordial dans un contexte de production alimentaire et pharmaceutique, certains matériels comportent des systèmes permettant de sortir tout ou partie des matériels de dosage sur divers types de supports, afin d'effectuer un nettoyage manuel et la maintenance du système.

Ceci reste une opération fastidieuse et sale qui demande beaucoup de temps et un emplacement spécialisé.

Il est en outre nécessaire de nettoyer le support interne de la rampe qui est par exemple sous la forme d'une glissière interne fixe, sur laquelle viennent se coller les produits d'enrobage lors de la rotation de la turbine.

La présente invention a donc pour but de résoudre le problème du lavage en proposant un dispositif de nettoyage efficace, tout en essayant de limiter le nombre d'éléments fixes à l'intérieur de la turbine cylindrique.

La présente invention a aussi pour but de proposer un système simple de sortie de la rampe de distribution et de dosage pour la maintenance et les réglages de celle-ci.

Ces buts sont atteints par une installation de dragéification ou d'enrobage de produits par rotation d'une turbine cylindrique, comportant une rampe de distribution et de dosage, montée sur des rails de support et de guidage extérieurs à la turbine permettant son extraction totale de la turbine pour la phase de lavage et sa mise en place sans aucun support interne à l'intérieur de ladite turbine pour la phase de fonctionnement, caractérisée en ce que les rails sont formés par deux poutres horizontales, parallèles à l'axe de rotation de la turbine qui est aussi l'axe longitudinal de la rampe, fixées à une de leurs extrémités au châssis de la turbine et à leur autre extrémité à une barre transversale horizontale soutenue par au moins un pied, en ce qu'au niveau d'une de ses extrémités, la rampe est solidaire d'un cadre parallélépipèdique, qui supporte également les moyens de fermeture de la turbine et qui coulisse le long des rails horizontaux et en ce que des buses de lavage sont disposées au-dessus de la rampe au niveau des rails de guidage.

Grâce à la position du support externe, la rampe de distribution et de dosage des produits d'enrobage est donc entièrement extractible de façon manuelle ou automatique par un simple coulissement selon l'axe de la turbine. Un tel dispositif supprime tout support fixe à l'intérieur du cylindre, et facilite donc considérablement le nettoyage. En position de lavage, la rampe est alignée avec l'axe de la turbine.

Les canalisations d'alimentation en produits, le plus souvent sous forme liquide, d'enrobage ou de dragéification sont de préférence des tuyaux flexibles connectés à ladite rampe.

De manière avantageuse, le dispositif comporte une plate-forme d'accès, disposée au-dessous de la rampe extraite de la turbine, pour effectuer la maintenance et/ou le réglage des doseurs.

La plate-forme peut supporter un bac de lavage rétractable ou télescopique, qui, dans la phase de lavage, vient se positionner de manière à englober l'ensemble de la rampe et de la gaine de ventilation.

Les buses de lavage peuvent être alimentées par exemple par un surpresseur d'eau associé à une ou plusieurs pompes doseuses permettant l'injection de produits spécifiques de nettoyage ou de désinfection.

La barre transversale horizontale terminant les deux parties horizontales est avantageusement supportée par un seul pied central vertical, permettant ainsi l'activité autour de ladite rampe sans gêne pour le personnel.

L'installation selon l'invention peut être utilisée pour la dragéification ou l'enrobage de produits alimentaires, de produits pharmaceutiques ou de semences.

L'invention va être décrite plus en détail en se référant aux figures suivantes dans lesquelles :
la figure 1 est une vue en coupe longitudinale du dispositif selon l'invention lorsque la rampe de distribution est introduite dans la turbine rotative ;
la figure 2 est une vue en coupe longitudinale du dispositif selon l'invention lorsque la rampe de distribution est entièrement extraite de la turbine rotative ;

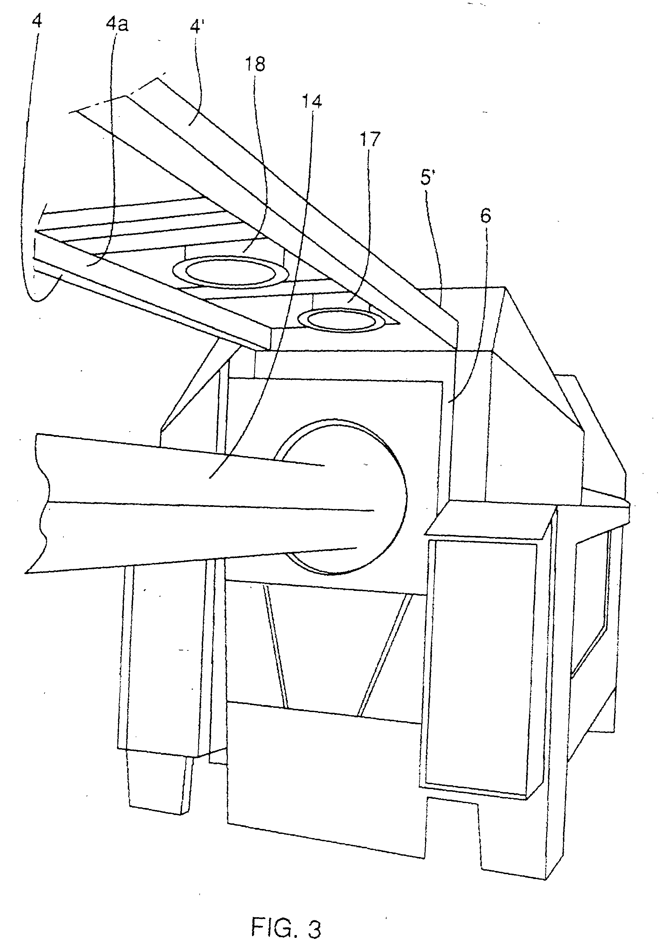

la figure 3 est une vue en perspective de la face avant de la turbine avec la rampe partiellement extraite ;
la figure 4 est une vue en perspective de la face avant de la turbine avec la rampe entièrement introduite dans la turbine ;
la figure 5 est une vue en perspective de la face avant de la turbine avec l'ensemble du dispositif support de la rampe partiellement extraite ;

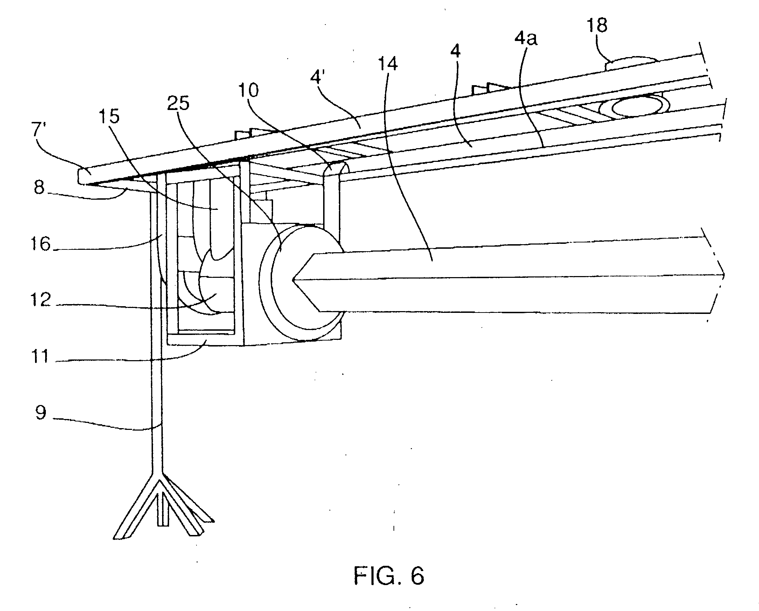

la figure 6 est une vue en perspective du cadre support de l'extrémité de la rampe.

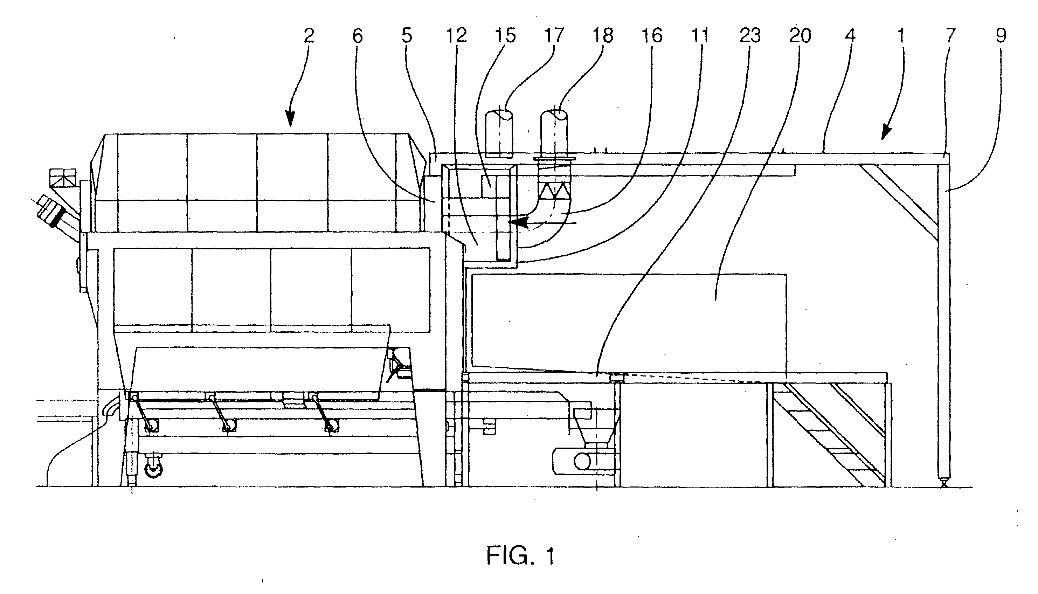

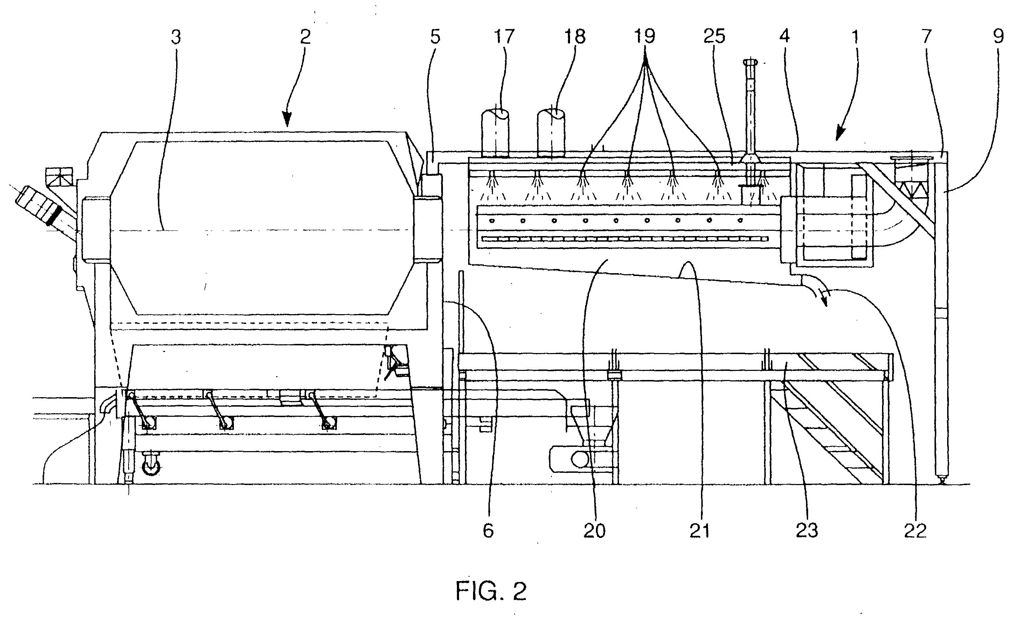

Sur les figures 1 et 2 est présentée la totalité du dispositif de nettoyage (1) associé à la turbine (2) d'une installation de dragéification ou d'enrobage tournant en rotation autour de l'axe (3). Ce dispositif comporte deux poutres (4, 4') horizontales, parallèles à l'axe (3), qui sont fixées par l'une de leurs extrémités (5, 5') à la face avant du châssis (6) de la turbine (2). Ces deux poutres (4, 4') sont en outre fixées, par leurs extrémités (7, 7') opposées à la turbine (2), à une barre transversale horizontale (8), soutenue par un pied (9).

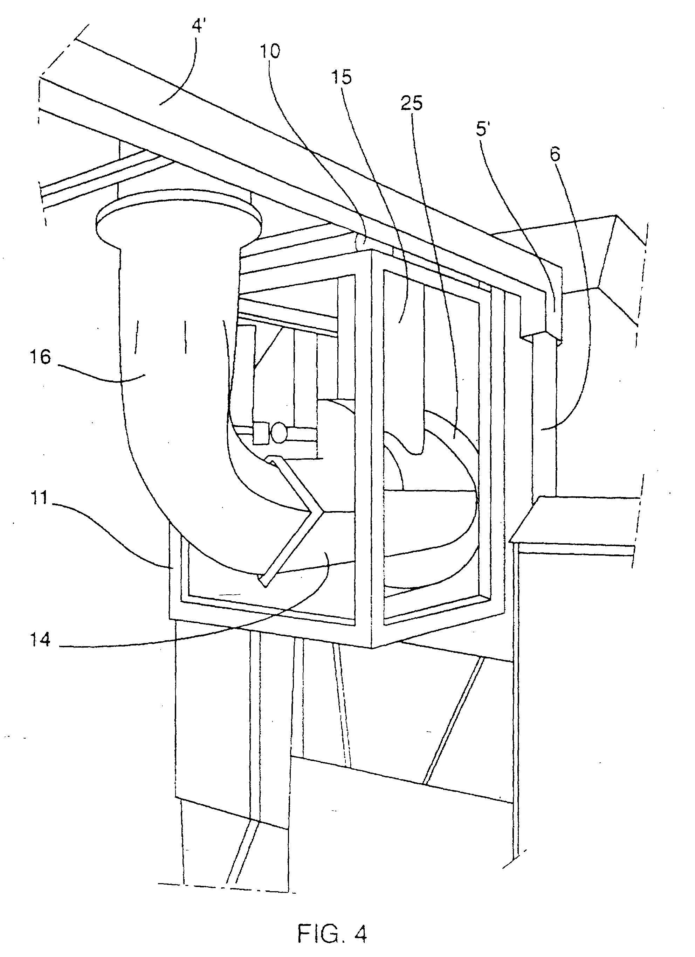

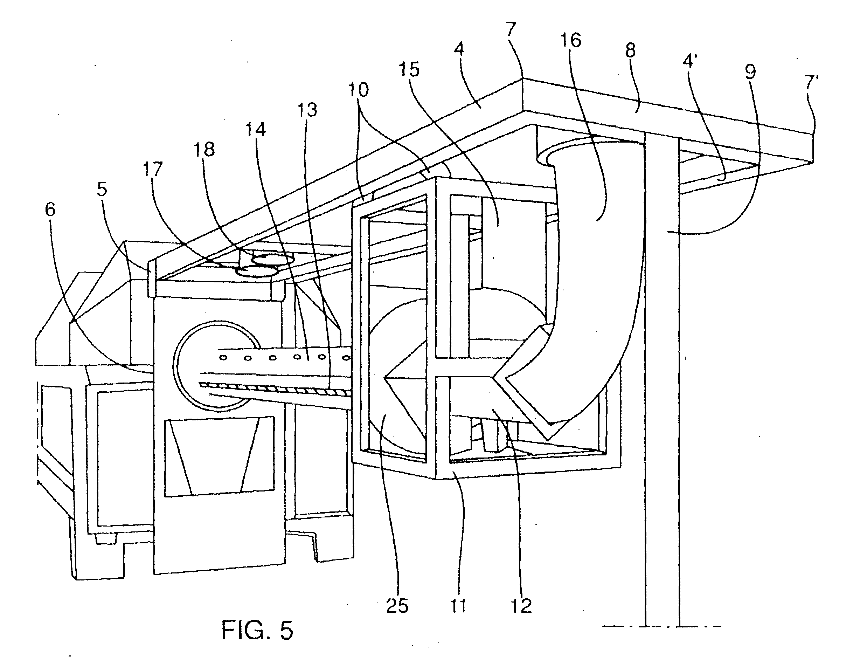

Ces poutres forment ou sont munies de rails (4a, 4a') dans lesquels viennent coulisser des pattes supérieures (10) (visibles sur les figures 4 et 5) d'un cadre (11) parallélépipédique qui supporte l'extrémité externe (12) de la rampe de distribution et de dosage (13).

En position de fonctionnement (figure 1) la rampe (13) est entièrement introduite dans la turbine cylindrique (2), seule dépasse son extrémité (12) solidaire du cadre (11) qui supporte alors l'ensemble de la rampe (13).

Une telle disposition permet ainsi de s'affranchir de tout support interne fixe pour la rampe de distribution (13) au sein de la turbine (2).

La rampe de distribution et de dosage (13) est associée à une gaine de ventilation (14) qui la prolonge au niveau du cadre (11), en des canalisations d'alimentation et d'évacuation d'air (15, 16) se raccordant à des conduits d'arrivée et sortie respectifs (17, 18) fixés aux poutres (4, 4'). Le cadre (11) supporte également des moyens de fermeture (25) de la turbine (2).

Lorsqu'un cycle de dragéification ou d'enrobage est terminé, la rampe de distribution et de dosage (13) est extraite de la turbine (2) par coulissement sur les rails (4a, 4a') pour la phase de lavage. Cette extraction, qui peut être effectuée manuellement ou automatiquement, a lieu dans le prolongement de l'axe (3) de la turbine (2).

La rampe (13) se trouve alors positionnée au-dessous d'une rangée de buses de lavage (19) qui projettent sur ladite rampe (13) de l'eau ou un autre liquide de nettoyage ou de désinfection, qui est ensuite récupéré dans un bac de lavage (20) englobant l'ensemble de la rampe (13) et gaine de ventilation. Ce bac de lavage (20) rétractable présente un fond (21) incliné muni à sa partie la plus basse d'une évacuation des liquides de lavage usagés qui peut être raccordée à un système de traitement des eaux usées approprié.

Les buses de lavage (19), disposées en au moins une rangée, sont par exemple connectées à un suppresseur d'eau (non représenté) qui peut être associé à une ou plusieurs pompes doseuses (non représentées) permettant l'injection de produits spécifiques de nettoyage ou de désinfection.

Une plate-forme d'accès (23) disposée sous la rampe (13) permet d'en effectuer facilement la maintenance et de régler les différents doseurs/distributeurs de la rampe lorsque celle-ci est partiellement ou totalement extraite. La plate-forme (23) sont également de support au bac de lavage (20) en position rétractée.

L'ensemble des opérations d'extraction et de nettoyage de la rampe (13) peut être pris en charge par l'automatisation générale de l'installation.

Un tel dispositif de nettoyage présente tout son intérêt pour des installations de dragéification ou d'enrobage de produits alimentaires, produits pharmaceutiques ou agro-alimentaires du type semences, notamment de grandes dimensions.

## Revendications

1. Installation de dragéification ou d'enrobage de produits par rotation d'une turbine cylindrique (2). comportant une rampe de distribution et de dosage (13), montée sur des rails (4a, 4a') de support et de guidage extérieurs à la turbine (2) permettant son extraction totale de la turbine (2) pour la phase de lavage et sa mise en place sans aucun support interne à l'intérieur de ladite turbine pour la phase de fonctionnement,
**caractérisée en ce que** les rails (4a, 4a') sont formés par deux poutres horizontales (4, 4'), parallèles à l'axe (3) de rotation de la turbine qui est aussi l'axe longitudinal de la rampe (13), fixées à une de leurs extrémités (5, 5') au châssis (6) de la turbine (2) et à leur autre extrémité (7, 7') à une barre (8) transversale horizontale soutenue par au moins un pied (9), **en ce qu'**au niveau d'une de ses extrémités, la rampe (13) est solidaire d'un cadre parallélépipèdique (11), qui supporte également les moyens de fermeture (25) de la turbine (2) et qui coulisse le long des rails horizontaux (4a, 4a') et **en ce que** des buses de lavage (19) sont disposées au-dessus de la rampe (13) au niveau des rails de guidage (4a, 4a').

2. Installation selon la revendication 1, **caractérisée en ce que** la rampe (13) de distribution ou de dosage est associée à une gaine de ventilation (14) dont les canalisations d'alimentation d'air et d'évacuation (15, 16) sont également solidaires dudit cadre (11).

3. Installation selon l'une quelconque des revendications précédentes, **caractérisée en ce que** les canalisations d'alimentation en produit d'enrobage ou de dragéification sont des tuyaux flexibles connectés à ladite rampe (13).

4. Installation selon l'une quelconque des revendications précédentes, **caractérisée en ce qu'**elle comporte une plate-forme d'accès (23), disposée au-dessous de la rampe (13) extraite de la turbine (2), pour effectuer la maintenance et/ou le réglage des doseurs.

5. Installation selon la revendication 4, **caractérisée en ce que** la plate-forme (23) supporte un bac de lavage (20) rétractable qui, dans la phase de lavage, vient se positionner de manière à englober l'ensemble de la rampe (13) et de la gaine (14) de ventilation.

6. Installation selon l'une quelconque des revendications précédentes, **caractérisée en ce que** les buses de lavage (19) sont alimentées par un surpresseur d'eau associé à une ou plusieurs pompes doseuses permettant l'injection de produits spécifiques de nettoyage ou de désinfection.

7. Utilisation de l'installation selon l'une quelconque des revendications 1 à 6 pour la dragéification ou l'enrobage de produits alimentaires, de produits pharmaceutiques ou de semences.

## Claims

1. Installation for the sugar-coating or encasing of products by rotation of a cylindrical rotor (2), comprising a distribution and metering manifold (13), mounted on support and guide rails (4a, 4a') outside the rotor (2) permitting its total withdrawal from the rotor (2) for the washing phase and its placement without any internal support within said rotor for the operating phase, **characterised in that** the rails (4a, 4a') are formed by two horizontal beams (4, 4') parallel to the axis (3) of rotation of the rotor which is also the longitudinal axis of the manifold (13), fixed at one of their ends (5, 5') to a chassis (6) of the rotor (2) and at their other end (7, 7') to a transverse horizontal bar (8) supported by at least one foot (9), and **in that** at the level of one of its ends, the manifold (13) is secured to a parallelepipedal frame (11), which also supports the closure means (25) of the rotor (2) and which slides along the horizontal rails (4a, 4a') and **in that** the washing nozzles (19) are disposed above the manifold (13) at the level of the guide rails (4a, 4a').

2. Installation according to claim 1, **characterised in that** the distribution or metering manifold (13) is associated with a ventilating sheath (14) the air supply and removal passages (15, 16) of which are also secured to said frame (11).

3. Installation according to any one of the preceding claims, **characterised in that** the supply passages for the encasing or sugar-coating product are flexible tubes connected to said manifold (13).

4. Installation according to any one of the preceding claims, **characterised in that** it comprises an access platform (23), disposed below the manifold (13) when withdrawn from the rotor (2), to carry out maintenance and/or adjustment of the metering devices.

5. Installation according to claim 4, **characterised in that** the platform (23) supports a retractable washing vat (20) which, in the washing phase, is positioned so as to enclose the assembly of the manifold (13) and the ventilating sheath (14).

6. Installation according to any one of the preceding claims, **characterised in that** the washing nozzles (19) are supplied by high pressure water associated with one or several metering pumps permitting the injection of specific cleaning or disinfecting products.

7. Use of the installation according to any one of claims 1 to 6 for the sugar-coating or encasing of food products, pharmaceutical products or seeds.

## Patentansprüche

1. Überziehungs- oder Kandierungsmaschine zur Bearbeitung von Produkten mittels einer drehenden, zylindrischen Turbine (2), die eine Verteiler- und Dosierleitung (13) aufweist, die auf außerhalb der Turbine befindlichen Trag- und Führungsschienen (4a, 4a') angebracht ist, die es ermöglichen, sie für den Reinigungsvorgang vollständig aus der Turbine (2) herauszuführen und für den Betriebsvorgang ohne jegliche innere Stütze wieder im Inneren der Turbine anzubringen,
**dadurch gekennzeichnet,**
**dass** die Schienen (4a, 4a') von zwei horizontalen Streben (4a, 4a') gebildet werden, die parallel zur Drehachse (3) der Turbine verlaufen, welche auch die Längsachse der Leitung (13) ist, und die an einem ihrer Enden (5a, 5a') an dem Rahmen (6) der Turbine (2) und an ihrem anderen Enden (7a, 7a') an einer horizontalen Querstrebe (8), die von mindestens einem Fuß (9) gestützt wird, befestigt ist, dass die Leitung (13) im Bereich eines ihrer Enden fest mit einem quaderförmigen Rahmen (11) verbunden ist, an dem auch die Schließmittel (25) der Turbine (2) sitzen und der auf den horizontalen Schienen (4a, 4a') entlang gleitet, und dass Reinigungsdüsen (19) über der Leitung (13) im Bereich der Führungsschienen (4a, 4a') angeordnet sind.

2. Überziehungs- oder Kandierungsmaschine nach Anspruch 1,
**dadurch gekennzeichnet,**
**dass** die Verteiler- und Dosierleitung (13) mit einer Belüftungsrohrleitung (14) verbunden ist, deren Luftzufuhrungs- und Abluftrohre (15, 16) ebenfalls fest mit diesem Rahmen (11) verbunden sind.

3. Überziehungs- oder Kandierungsmaschine nach einem der vorherigen Ansprüche,
**dadurch gekennzeichnet,**
**dass** die Versorgungsleitungen für das Überzugs- oder Kandierprodukt aus Schläuchen bestehen, die an die genannte Leitung (13) angeschlossen sind.

4. Überziehungs- oder Kandierungsmaschine nach einem der vorherigen Ansprüche,
**dadurch gekennzeichnet,**
**dass** sie eine Zugangsplattform (23) aufweist, die unterhalb der aus der Turbine (2) ausgefahrenen Leitung (13) angeordnet ist, um die Wartung und / oder die Einstellung der Dosierapparate durchzuführen.

5. Überziehungs- oder Kandierungsmaschine nach Anspruch 4,
**dadurch gekennzeichnet,**
**dass** auf der Plattform (23) ein Reinigungsbehälter (20) sitzt, der in der Reinigungsphase in eine Stellung dergestalt kommt, dass er die Leitung (13) und die Belüftungsrohrleitung (14) insgesamt umgibt.

6. Überziehungs- oder Kandierungsmaschine nach einem der vorherigen Ansprüche,
**dadurch gekennzeichnet,**
**dass** die Reinigungsdüsen (19) durch eine Druckwasservorrichtung in Verbindung mit einer oder mehreren Dosierpumpen zum Einspritzen von speziellen Reinigungs- oder Desinfektionsprodukten versorgt werden.

7. Verwendung der Maschine nach einem der Ansprüche 1 bis 6 zum Überziehen oder Kandieren von Lebensmittelprodukten, pharmazeutischen Produkten oder Saatgut.
